# EUROPÄISCHE PATENTSCHRIFT

(11) **EP 3 916 424 B1**
(45) Veröffentlichungstag und Bekanntmachung des Hinweises auf die Patenterteilung: **09.10.2024**
(21) Anmeldenummer: 20176355.4
(22) Anmeldetag: 25.05.2020
(51) Int. Cl.: G01S 7/481, G01S 17/34, G01S 17/89, G01S 17/931, G01S 7/4912, G02F 1/31, H04Q 11/00

(54) **VORRICHTUNG UND VERFAHREN ZUR SCANNENDEN MESSUNG DES ABSTANDS ZU EINEM OBJEKT**
DEVICE AND METHOD FOR SCANNING MEASUREMENT OF THE DISTANCE TO AN OBJECT
DISPOSITIF ET PROCÉDÉ DE MESURE PAR BALAYAGE DE LA DISTANCE À UN OBJET

(43) Veröffentlichungstag der Anmeldung: 01.12.2021
(73) Patentinhaber: Scantinel Photonics GmbH, 89077 Ulm (DE)
(72) Erfinder: Davydenko, Vladimir, 76332 Bad Herrenalb (DE)
(74) Vertreter: Ostertag & Partner Patentanwälte mbB

(56) Entgegenhaltungen:
- US-A1- 2018 364 336
- US-A1- 2019 265 574
- US-A1- 2019 377 135

## Beschreibung

### HINTERGRUND DER ERFINDUNG

### 1. Gebiet der Erfindung

Die Erfindung betrifft eine Vorrichtung und ein Verfahren zur scannenden Messung des Abstands zu einem bewegten oder unbewegten Objekt auf der Grundlage der FMCW-LiDAR-Technologie. Solche Vorrichtungen können beispielsweise bei autonom fahrenden Fahrzeugen eingesetzt werden und als photonische integrierte Schaltkreise (PIC, *Photonic Integrated Circuit*) realisiert sein, die keine beweglichen Teile enthalten.

### 2. Beschreibung des Standes der Technik

Zur optischen Abstandsmessung ist ein als FMCW-LiDAR bezeichnetes Messprinzip bekannt, bei dem ein optisches Signal mit zeitlich variierender Frequenz (FMCW steht für *frequency modulated continuous wave)* auf das zu vermessende Objekt gerichtet und nach Reflexion an dem Objekt erfasst und ausgewertet wird. Wenn zusätzlich die Doppler-Verschiebung berücksichtigt wird, lässt sich auch die Relativgeschwindigkeit zwischen der Scanvorrichtung und dem Objekt berechnen. Ausführlicher beschrieben ist dieses Messprinzip beispielsweise in der DE 10 2018 203 315 A1.

Auf diesem Messprinzip beruhende Scanner müssen sehr robust und zuverlässig sein, wenn sie in Fahrzeugen eingesetzt werden sollen. Dies gilt insbesondere dann, wenn die Fahrzeuge autonom fahren, da die Sicherheit beim autonomen Fahren entscheidend von dem Scanner abhängt, der zur Erzeugung eines dreidimensionalen Abbildes der Umgebung eingesetzt wird. Idealerweise enthalten solche Scanner keine empfindlichen beweglichen Bauteile wie Scanspiegel.

Scanner, die als photonische integrierte Schaltkreise realisiert sind, benötigen keine bewegliche Bauteile und sind daher für Anwendungen in Fahrzeugen besonders geeignet. Offenbart sind solche Scanner beispielsweise in der US 2017/0371227 A1 und der US 2019/0377135 A1. Bei diesen Scannern wird eine Verteilmatrix mit mehreren baumartig kaskadierten optischen Schaltern eingesetzt, welche die optischen Signale auf unterschiedliche optische Wellenleiter verteilen, die unterschiedlichen Scanrichtungen zugeordnet sind.

Aus der US 2018/267250 A1 ist eine lenkbare optische Schaltanordnungen bekannt, bei der auf einem gemeinsamen Substrat viele Tausend Emitter angeordnet sind.

Die US 2018 / 0364336 A1 offenbart LiDAR-Systeme mit mehreren Detektoren, die mehrere Einfallswinkel empfangener Strahlen bestimmen können und keine Phasenschieber benötigen.

Die US 2019/0265574 A1 offenbart eine integrierte optische Strahlsteuerungsvorrichtung, die eine planare dielektrische Linse und einen Ausgangskoppler, wie z. B. ein Gitter oder ein photonischer Kristall, enthält, der die kollimierten Strahlen in verschiedene Richtungen aus der Linsenebene führt. Eine Schaltmatrix legt fest, welcher Eingangsanschluss beleuchtet wird, definiert damit die Ausbreitungsrichtung des austretenden Strahls. Bei einem Ausführungsbeispiel sind mehrere parallel geschaltete Anordnungen vorgesehen, die jeweils einen Strahlteiler, einen Detektor und eine Verteilmatrix umfassen, die aus passiven Strahlteilern und aktiv schaltbaren Verstärkern aufgebaut ist.

Mit den bisherigen Ansätzen ist es allerdings schwierig, in kurzer Zeit so viele Abstandsinformationen zu sammeln, dass damit in Echtzeit dreidimensionale Bilder von der Umgebung erzeugt werden können.

### ZUSAMMENFASSUNG DER ERFINDUNG

Aufgabe der Erfindung ist es, eine Vorrichtung und ein Verfahren zur scannenden Messung des Abstands zu einem Objekt anzugeben, welche die vorgenannten Probleme lösen.

Diese Aufgabe wird erfindungsgemäß gelöst durch eine Vorrichtung mit den Merkmalen des Anspruchs 1.

Durch die erfindungsgemäße Bereitstellung mehrerer parallel angeordneter und weitgehend eigenständiger Verarbeitungseinheiten, die mit einer gemeinsamen Lichtquelle verbunden sind, ist es möglich, mehrere Abstandsmessungen gleichzeitig durchzuführen. Die Zahl der gleichzeitig durchführbaren Abstandsmessungen ist dabei gleich der Zahl der Verarbeitungseinheiten und kann vervielfacht werden, wenn die Lichtquelle mehrere Frequenzbänder gleichzeitig zur Verfügung stellt (dazu weiter unten mehr). Trotzdem zeichnet sich die erfindungsgemäße Vorrichtung durch sehr zuverlässige Messergebnisse aus, da an den Detektoren der Verarbeitungseinheiten das Signal-Rausch-Verhältnis hoch ist. Dies hängt damit zusammen, dass die von dem Objekt reflektierten und ohnehin sehr schwachen Messsignale nur die vergleichsweise kleine Verteilmatrix einer einzelnen Verarbeitungseinheit und auch nur einen einzigen optischen Zirkulator durchtreten müssen, um zum Detektor zu gelangen. Die schwachen Messsignale werden daher auf ihrem Weg zum Detektor nur wenig durch die dabei zu durchtretenden optischen Komponenten gedämpft.

Die vergleichsweise kleinen Verteilmatrizen der einzelnen Verarbeitungseinheiten haben auch Vorteile für die sich in der entgegengesetzten Richtung ausbreitenden Ausgangssignale. Da diese nur wenige optische Schalter in der Verteilmatrix durchtreten, müssen am Eingang der Verteilmatrizen keine hohen Intensitäten anliegen, um ausreichende Intensitäten am Ausgang der Freiraumkoppler zu gewährleisten. Bei den herkömmlichen Vorrichtungen dieser Art, die große Verteilmatrizen haben, sind hohe Intensitäten an den Eingängen der Verteilmatrizen unvermeidlich, da nur mit hohen Intensitäten sichergestellt ist, dass die Ausgangssignale auch nach dem Passieren einer großen Zahl von optischer Schaltern noch eine ausreichend hohe Intensität haben, wenn sie aus den Freiraumkopplern austreten. Sehr hohe Intensitäten können aber die optischen Schalter schädigen und sind deswegen zu vermeiden.

Soweit hier und im Folgenden davon die Rede ist, dass bestimmte optische Komponenten oder Baugruppen miteinander verbunden sind, so schließt dies auch nicht-permanente Verbindungen ein, also Verbindungen, die nur zeitweise über optische Schalter hergestellt werden.

Bei einem Ausführungsbeispiel hat die Ablenkoptik eine vordere Brennebene, in der die Freiraumkoppler oder Bilder der Freiraumkoppler angeordnet sind. Dadurch verlassen die optischen Ausgangssignale die Ablenkoptik als kollimierte Lichtstrahlen, deren Richtung vom Ort abhängt, an dem die optischen Ausgangssignale aus einem Freiraumkoppler austreten. Bei einer solchen Anordnung kann auf zusätzliche Mikrolinsen hinter den Freiraumkopplern zum Zwecke der Kollimation verzichtet werden.

Für die Detektoren haben sich symmetrische Fotodetektoren (engl. *balanced photodetectors*) als besonders geeignet herausgestellt, denen nicht nur die vom Objekt reflektierten optischen Messsignale, sondern auch die von der Lichtquelle erzeugten optischen Ausgangssignale zugeführt werden. Derartige Detektoren haben nur eine geringe Empfindlichkeit gegenüber optischem Rauschen, das von der Lichtquelle erzeugt wird.

Bei einem Ausführungsbeispiel ist im Lichtweg zwischen der Lichtquelle und den Verarbeitungseinheiten ein gemeinsamer optischer Verstärker angeordnet. Eine optische Verstärkung kann alternativ jedoch auch innerhalb der einzelnen Verarbeitungseinheiten erfolgen.

Bei einem anderen Ausführungsbeispiel ist die Lichtquelle dazu eingerichtet, gleichzeitig mehrere optische Ausgangssignale mit zeitlich variierender Frequenz in unterschiedlichen Frequenzbändern zu erzeugen. Durch Verwenden eines Gitters kann das Licht in den unterschiedlichen Frequenzbändern in unterschiedliche Richtungen abgestrahlt werden, wodurch ein Scannen nicht nur in einer Ebene, sondern in allen Dreiraumrichtungen möglich ist. Die Lichtquelle kann in diesem Fall z.B. mehrere Einzelquellen aufweisen, die über eine Sammelmatrix, die mehrere optische Schalter und/oder optische Koppler aufweist, mit der Verteilmatrix verbunden ist. Anstelle eines Gitters kann auch ein anderes dispersives optisches Element vorgesehen und insbesondere Teil der Ablenkoptik sein, das die optischen Ausgangssignale in einer ersten Ebene wellenlängenabhängig aufspaltet, die zumindest im Wesentlichen senkrecht zu einer zweiten Ebene angeordnet ist, innerhalb derer die sich aus den Freiraumkopplern austretenden optischen Ausgangssignale ausbreiten.

Ein Scannen in allen drei Raumrichtungen ist aber auch möglich, wenn die Freiraumkoppler in einem regelmäßigen oder unregelmäßigen zweidimensionalen Array neben- und übereinander angeordnet sind. Die Ablenkoptik übersetzt die Orte in diesem Array dann in Richtungen, entlang der sich die optischen Ausgangssignale ausbreiten.

Die Lichtquelle kann dazu eingerichtet sein, ein optisches Ausgangsignal zu erzeugen, dessen Frequenz über der Zeit im Wechsel linear ansteigt und linear abfällt. Alternativ hierzu kann die Abhängigkeit der Frequenz von der Zeit durch eine Sägezahlfunktion beschrieben sein.

Bei den Freiraumkopplern handelt es sich vorzugsweise um Kantenkoppler (engl. *edge coupler*) oder Gitterkoppler (engl. *grating coupler*), wie sie an sich im Stand der Technik bekannt sind.

Erfindungsgemäß weist die optische Verteilmatrix mindestens einen ersten optischen Schalter, der eine erste Schaltzeit und eine erste Einfügedämpfung hat, und mehrere zweite optische Schalter auf, die jeweils eine zweite Schaltzeit, die länger ist als die erste Schaltzeit und eine zweite Einfügedämpfung haben, die kleiner ist als die erste Einfügedämpfung. Der erste optische Schalter ist dabei auf einem Niveau des Baums angeordnet, das niedriger ist als das Niveau, auf dem die zweiten optischen Schalter angeordnet sind.

Diese vorteilhafte Ausgestaltung beruht auf der Erkenntnis, dass man bei geeigneter Ansteuerung der optischen Schalter in der Schaltmatrix nicht alle optischen Schalter mit kurzen Schaltzeiten betreiben muss. Wenn ein schneller optischer Schalter (also ein Schalter mit kurzer Schaltzeit) auf einem niedrigen Niveau des Baums angeordnet ist, können die darauf folgenden optischen Schalter auf den höheren Niveaus des Baums langsamer sein und somit eine längere Schaltzeit haben. In diesem Fall ist es nämlich möglich, dass die langsameren Schalter während eines Messintervalls, bei dem keine optischen Signale die langsameren Schalter passieren, ihren Schaltzustand ändern, um für das nächste Messintervall vorbereitet zu sein. Nur der optische Schalter auf dem niedrigen Niveau muss schnell schalten, um zwischen zwei aufeinander folgenden Messintervallen mit möglichst wenig Verzögerung eine Verbindung zu dem anderen Zweig des Baums herstellen zu können. Während also in einem Messintervall ein mit dem schnellen Schalter verbundener Zweig aktiv ist, werden in dem anderen Zweig die langsamen Schalter umgestellt und befinden sich in der richtigen Position, wenn nach Abschluss des Messintervalls der schnelle Schalter die aktiven Zweige wechselt.

Die Schaltzeit wird vorliegend definiert als die Zeitspanne, die benötigt wird, um 90% der Lichtintensität in den jeweils anderen Schaltzustand zu überführen.

Sofern keine besonderen Anforderungen bestehen, in welcher Reihenfolge die Freiraumkoppler von der Schaltmatrix mit der Lichtquelle verbunden werden, genügt es, wenn ein einziger erster optischer Schalter mit kurzer Schaltzeit und höherer Einfügedämpfung auf dem niedrigsten Niveau des Baums angeordnet ist und auf allen anderen Niveaus ausschließlich zweite optische Schalter angeordnet sind, die langsamer sind, aber eine niedrigere Einfügedämpfung haben. Bei einer Verteilmatrix mit 16 Ausgängen durchlaufen die optischen Signale z.B. vier 1x2-Schalter, von denen erfindungsgemäß aber nur der im Lichtweg als erster durchtretene Schalter auf dem niedrigsten Niveau eine kurze Schaltzeit aufweisen muss und deswegen eine höhere Einfügedämpfung hat. Durch die erfindungsgemäße Anordnung unterschiedlicher Schaltertypen kann die Einfügedämpfung der gesamten Verteilmatrix so weit reduziert werden, dass die vom Detektor erfassten Signale ein ausreichend hohes Signal-Rausch-Verhältnis haben. Die Geschwindigkeit der gesamten Verteilmatrix wird nur durch die Schaltzeit des schnellen ersten Schalters begrenzt. Solange die zweiten langsamen Schalter eine Schaltzeit haben, die kürzer ist als die Messfrequenz, können die zweiten optischen Schalter auf minimale Einfügedämpfung hin optimiert werden.

Welche optischen Schalter konkret zum Einsatz kommen, hängt von der konkreten Anwendung ab. Speziell für die Anwendung in Abstandsscannern, die in autonom fahrenden Fahrzeugen eingesetzt werden, haben sich 1 x2-Schalter auf der Basis von thermooptischen oder elektrooptischen Mach-Zehnder-Interferometern als geeignet erwiesen. Im Prinzip kommen aber auch andere Schalter, zum Beispiel 1 x3-Schalter oder generell nxm-Schalter in Betracht, wobei vorzugsweise n < m gilt.

Gegenstand der Erfindung ist ferner ein Verfahren mit den Merkmalen des Anspruchs 10.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine schematische Seitenansicht eines Fahrzeugs, das sich einem Objekt nähert, das von einer erfindungsgemäßen Scanvorrichtung erfasst wird;
- Figur 2: eine Draufsicht auf die in der Figur 1 gezeigte Scanvorrichtung;
- Figur 3: den Aufbau der Scanvorrichtung gemäß einem ersten Ausführungsbeispiel in einer schematischen Darstellung;

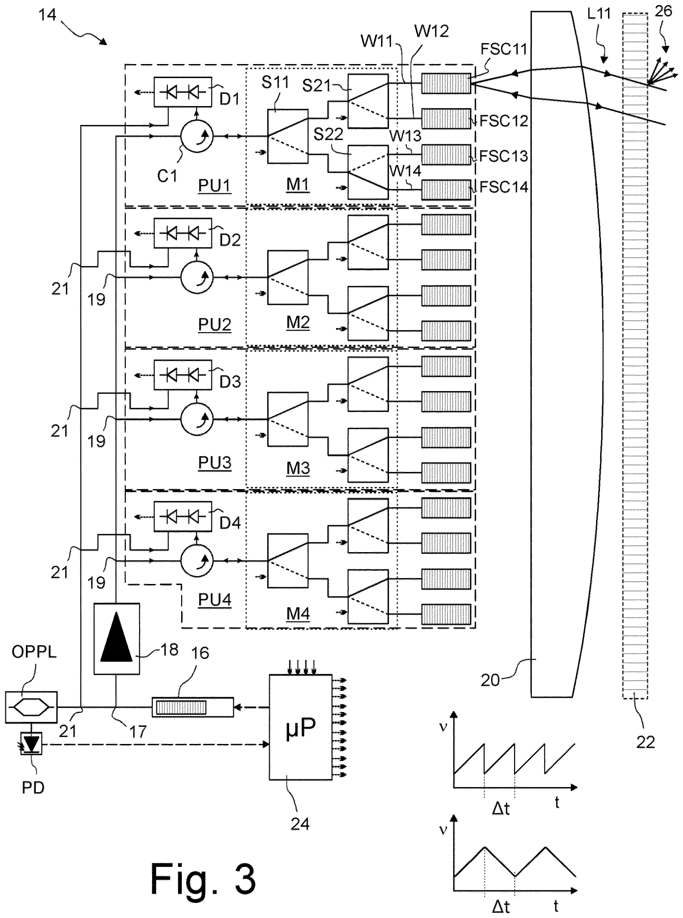

- Figur 3: eine einzelne Verteilmatrix und die Ablenkoptik der in der Figur 3 gezeigten Scanvorrichtung;

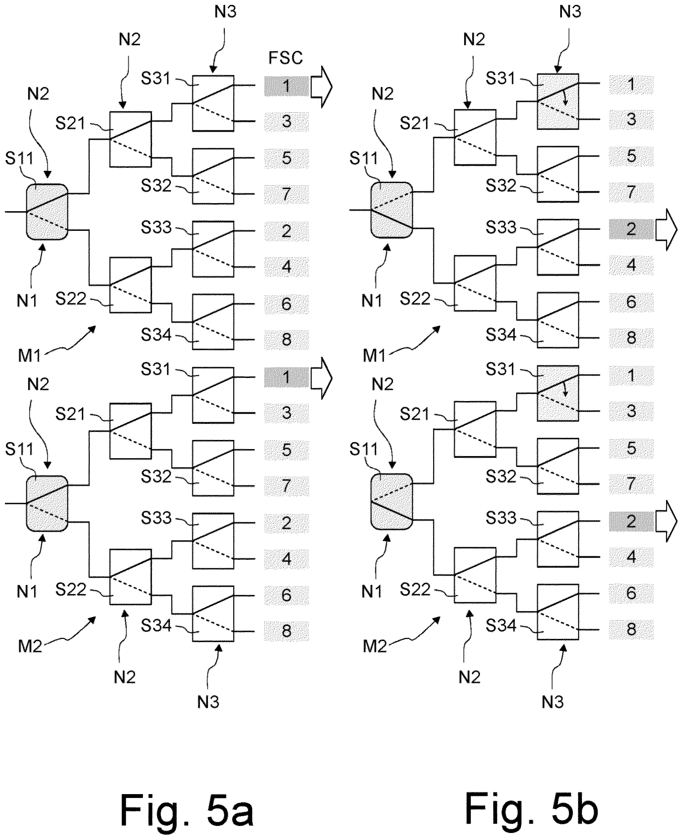

- Figuren 5a bis 5d: die Verteilmatrizen zweier benachbarter Verarbeitungseinheiten in unterschiedlichen Schaltzuständen;

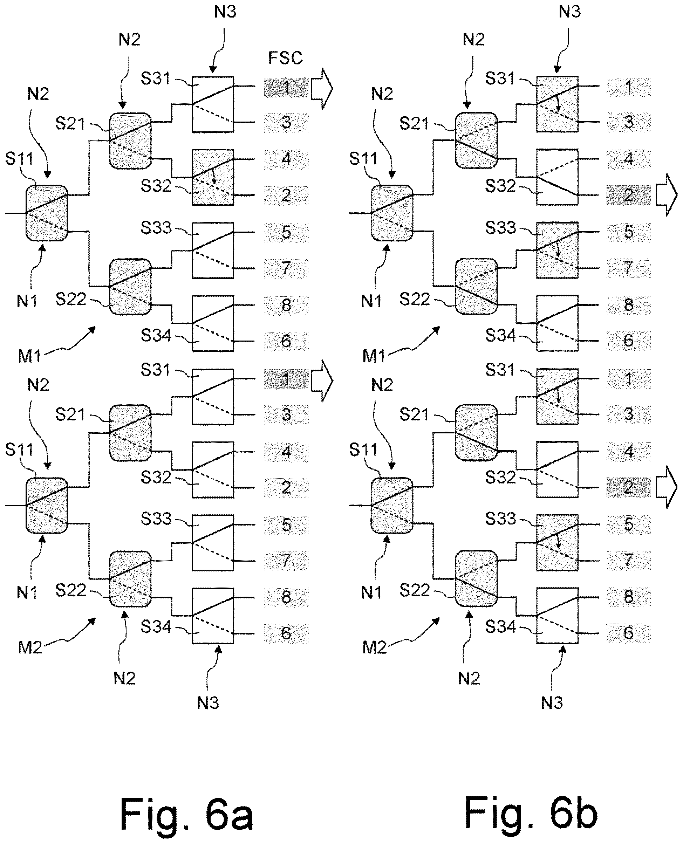

- Figuren 6a und 6b: eine Variante für Verteilmatrizen, bei der schnelle Schalter in zwei unterschiedlichen Niveaus der Verteilmatrizen angeordnet sind, um die Freiraumkoppler flexibler ansteuern zu können;

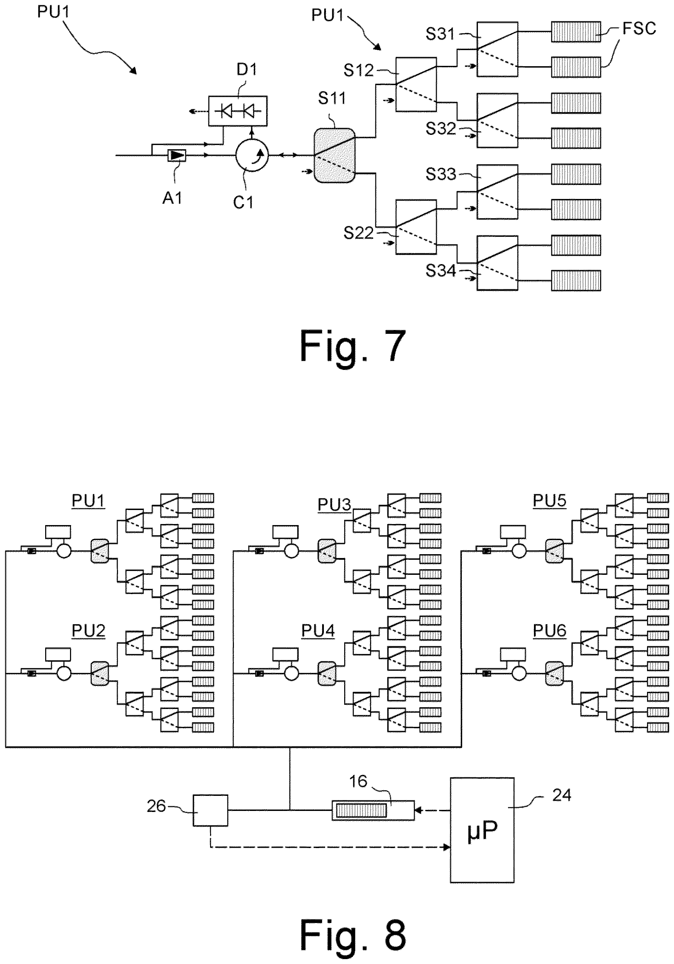

- Figur 7: eine Verarbeitungseinheit der Scanvorrichtung, die zusätzlich einen Verstärker enthält;
- Figur 8: eine Anordnung mehrerer Verarbeitungseinheiten gemäß der Figur 7, die zu einer regelmäßigen Anordnung der Freiraumkoppler in einem zweidimensionalen Array führt.

### BESCHREIBUNG BEVORZUGTER AUSFÜHRUNGSBEISPIELE

### 1. Anwendungsbeispiel

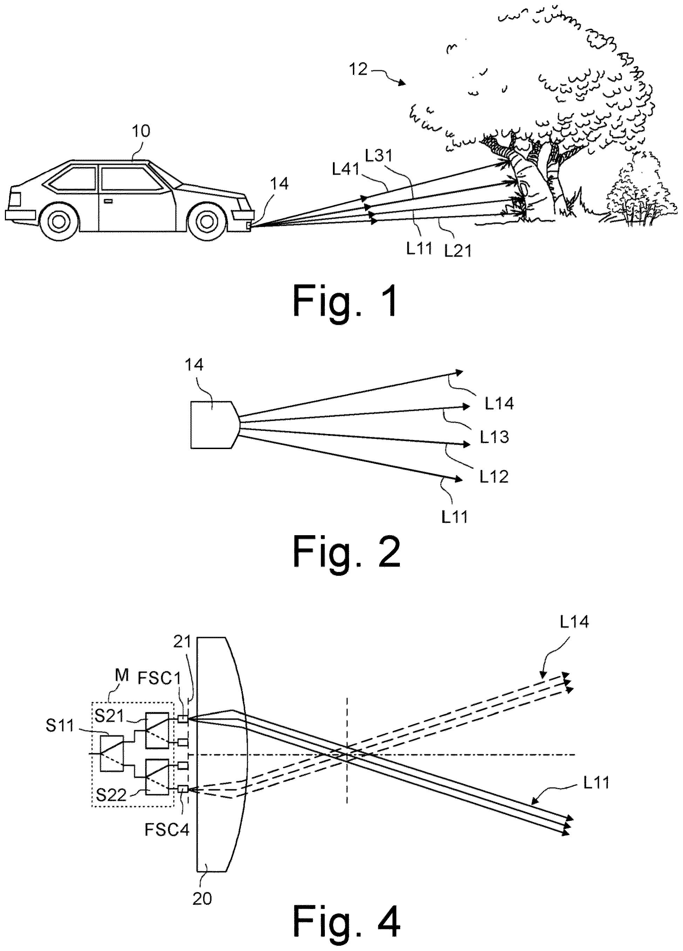

Die Figur 1 zeigt in einer schematischen Seitenansicht ein Fahrzeug 10, das sich einem Objekt 12 nähert, bei dem es sich in der Figur 1 um einen Baum handelt. Das Fahrzeug 10 verfügt über mindestens eine Scanvorrichtung 14, die mit Hilfe von Lichtstrahlen L11, L21, L31 und L41 die vorausliegende Umgebung des Fahrzeugs 10 abtastet, woraus ein dreidimensionales Bild der Umgebung berechnet wird. Außerdem bestimmt die Scanvorrichtung 14 die Relativgeschwindigkeit zu dem Objekt 12. Diese Information ist vor allem dann wichtig, wenn das Objekt 12 ein anderes Fahrzeug ist und sich ebenfalls bewegt.

Die von der Scanvorrichtung 14 ermittelten Informationen über die vorausliegende Umgebung des Fahrzeugs 10 können beispielsweise dazu verwendet werden, den Fahrer des Fahrzeugs 10 Fahrer assistierend bei der Fahrzeugsteuerung zu unterstützen, indem Warnmeldungen erzeugt werden, wenn eine Kollision des Fahrzeugs 10 mit dem Objekt 12 droht. Falls das Fahrzeug 10 autonom fährt, werden die Informationen über die vorausliegende Umgebung von den Steueralgorithmen benötigt, die das Fahrzeug 10 steuern.

Wie in der Figur 1 erkennbar ist, strahlt die Scaneinrichtung 14 in einer vertikalen Ebene (in der Figur 1 ist dies die Papierebene) die Lichtstrahlen L11 bis L41 in unterschiedliche Richtungen ab, wodurch die Umgebung in vertikaler Richtung abgescannt wird. Gleichzeitig findet auch ein Abscannen in horizontaler Richtung statt, wie dies die Figur 2 in einer Draufsicht auf die Scanvorrichtung 14 zeigt. Dort sind vier Lichtstrahlen L11, L12, L13 und L14 gezeigt, die in einer horizontalen Ebene in unterschiedliche Richtungen abgestrahlt werden.

Aus Gründen der Übersichtlichkeit ist in den Figuren 1 und 2 unterstellt, dass nur jeweils vier Lichtstrahlen Ln1 bis Ln4 in vier unterschiedlichen Ebenen, d.h. insgesamt 16 Lichtstrahlen, von der Scaneinrichtung 14 erzeugt werden. Bevorzugt sendet die Scanvorrichtung 14 sehr viel mehr Lichtstrahlen aus. Bevorzugt sind beispielsweise k·2ⁿ Lichtstrahlen, wobei n eine natürliche Zahl zwischen 7 und 13 ist und angibt, wie viele Strahlen in einer von k Ebenen abgestrahlt werden, wobei k eine natürliche Zahl zwischen 1 und 16 ist.

### 2. Aufbau

Die Figur 3 zeigt den Aufbau der Scanvorrichtung 14 in einer schematischen Darstellung. Die Scanvorrichtung 14, die vorzugsweise als photonischer integrierter Schaltkreis aufgebaut ist, kann in der Realität insbesondere hinsichtlich der Dimensionen und dem Verlauf der optischen Wellenleiter anders aussehen.

Die Scanvorrichtung 14 umfasst eine Lichtquelle 16, die ein optisches FMCW-Signal erzeugt. Die Lichtquelle 16 erzeugt somit im Gegensatz zu herkömmlichen Scanvorrichtungen keine kurzen Lichtpulse mit hoher Pulsleistung, sondern ein kontinuierliches Signal, dessen Frequenz v zeitlich variiert. Die Abhängigkeit der Frequenz v von der Zeit t kann beispielsweise durch eine Sägezahnfunktion oder durch eine periodische Dreiecksfunktion gegeben sein, wie dies die beiden in der Figur 3 enthaltenen Graphen illustrieren. Bei einer Sägezahnfunktion steigt die Frequenz v während eines Messintervalls *Δt* linear an, springt dann zurück auf ihren ursprünglichen Wert, steigt erneut mit der gleichen Steigung linear an usw. Die Dauer des Messintervalls Δt ist länger als die Zeitdauer, die das von der Scanvorrichtung 14 emittierte Licht benötigt, um nach Reflexion am Objekt 12 wieder zurück in die Scanvorrichtung 14 zu gelangen. Bei einer periodischen Dreiecksfunktion ist die Frequenz v eine lineare Funktion der Zeit t, wobei das Vorzeichen der Steigung zwischen aufeinander folgenden Messintervallen Δt wechselt.

Die Lichtquelle 16 kann beispielsweise einen DFB-Laser enthalten, der Licht mit einer Wellenlänge von 1550 nm emittiert und eine Bandbreite zwischen etwa 200 nm und 300 nm hat. Die Frequenzmodulation (engl. *chirp*) wird dem Signal durch eine optische Phasenregelschleife OPPL (engl. *optical phased-locked loop*) aufgeprägt. Der VCO-Block der Phasenregelschleife kann z.B. einen abstimmbaren Laser aufweisen, der in ein Mach-Zehnder-Interferometer (MZI) injiziert wird, gefolgt von einer Photodiode PD. Die Messintervalle Δt haben eine Dauer, die vorzugsweise zwischen 10 µs und 100 µs liegt.

Ein Teil der von der Lichtquelle 16 erzeugten optischen Ausgangssignale wird über einen Verzweiger (engl. *splitter*) 17 einem Verstärker 18 zugeleitet, dort verstärkt und dann gleichmäßig über drei weitere Verzweiger 19 auf vier Verarbeitungseinheiten PU1 bis PU4 aufgeteilt, die in der Figur 3 jeweils mit gestrichelten Linien eingerahmt sind. Die Verarbeitungseinheiten PU1 bis PU4 sind dadurch optisch parallel zueinander angeordnet. Vorzugsweise sind die Verzweiger 19, die zwischen dem Verstärker 18 und den Verarbeitungseinheiten PU1 bis PU4 angeordnet sind, so ausgelegt, dass an den Eingängen der Verarbeitungseinheiten PU1 bis PU4 zu einem gegebenen Zeitpunkt das gleiche optische Ausgangssignal mit gleicher Intensität anliegt. Im Prinzip ist es jedoch auch möglich, die optische Intensität des Ausgangssignals ungleichmäßig aufzuteilen, falls das von der Scanvorrichtung 14 abgestrahlte Licht in bestimmten Richtungen eine höhere Intensität haben soll.

Der Aufbau aller vier Verarbeitungseinheiten PU1 bis PU4 ist gleich und wird im Folgenden am Beispiel der Verarbeitungseinheit PU1 näher erläutert.

Die Verarbeitungseinheit PU1 enthält eine Verteilmatrix M1, welche die Struktur eines Baums mit mehreren Niveaus hat und die von der Lichtquelle 12 erzeugten optischen Ausgangssignale auf mehrere optische Wellenleiter W11 bis W14 verteilt. Im dargestellten Ausführungsbeispiel hat der Baum der Einfachheit halber nur zwei Niveaus. Auf dem ersten Niveau ist ein optischer Schalter S11 und auf dem zweiten Niveau sind zwei optische Schalter S21, S22 angeordnet. Jeder Schalter S11, S21, S22 ist als 1x2-Schalter ausgebildet und kann beispielsweise ein thermooptisches Mach-Zehnder-Interferometer enthalten. Aufgrund der Baumstruktur kann die Verteilmatrix M1 ein eingangsseitig anliegendes Ausgangsignal wahlweise auf jeden der vier optischen Wellenleiter W11 bis W14 verteilen.

Jeder der vier Wellenleiter W11 bis W14 ist mit einem Freiraumkoppler FSC11 bis FSC14 verbunden. Die Freiraumkoppler FSC11 bis FSC14 können beispielsweise als Gitterkoppler oder als Kantenkoppler ausgebildet sein, wie dies an sich im Stand der Technik bekannt ist. Die Freiraumkoppler FSC11 bis FSC14 dienen dazu, die in den optischen Wellenleitern W11 bis W14 geführten optische Ausgangssignale in den angrenzenden Freiraum auszukoppeln und optische Ausgangssignale, die an dem Objekt 12 reflektiert wurden, als optische Messsignale wieder in die Wellenleiter W11 bis W14 einzukoppeln.

Die Verarbeitungseinheit PU1 umfasst außerdem einen Detektor D1, der eine Überlagerung des von dem Objekt 12 reflektierten optischen Messsignals mit einem Referenzsignal erfasst, das aus einem abgezweigten Teil des von der Lichtquelle 16 erzeugten optischen Ausgangssignals besteht. Der Detektor D1 ist zu diesem Zweck als symmetrischer Fotodetektor ausgebildet und über Verzweiger 21 und 17 mit der Lichtquelle 16 verbunden.

Die Verarbeitungseinheit PU1 enthält außerdem einen optischen Zirkulator C1, der so mit der Lichtquelle 16, der Verteilmatrix M1 und dem Detektor D1 verbunden ist, dass von der Lichtquelle 16 zugeführte optische Ausgangssignale an die Verteilmatrix M1 geleitet und von der Verteilmatrix M1 kommende optische Messsignale an den Detektor D1 geleitet werden. Ein optischer Zirkulator hat in der Regel drei Anschlüsse (Ports), wobei Licht, das an einem Anschluss eintrifft, vom Zirkulator an den jeweils nächsten Anschluss weitergeleitet wird (also 1 → 2, 2 → 3 und 3 → 1). Photonisch integrierbare optische Zirkulatoren sind im Stand der Technik bekannt, weswegen auf deren Aufbau an dieser Stelle nicht näher eingegangen wird.

Wie oben bereits erläutert wurde, sind die anderen drei Verarbeitungseinheiten PU2 bis PU4 in gleicher Weise aufgebaut. Die Freiraumkoppler FSC der vier Verarbeitungseinheiten PU1 bis PU4 sind im dargestellten Ausführungsbeispiel entlang einer Linie nebeneinander aufgereiht, und zwar mit einer Teilung p (engl. *pitch*), deren Wert zwischen 25µm und 400 µm liegt. Die Freiraumkoppler FSC befinden sich dabei in der vorderen Brennebene einer Ablenkoptik 20, welche die aus den Freiraumkopplern FSC ausgekoppelten Ausgangssignale so ablenkt, dass sie in unterschiedliche Richtungen abgestrahlt werden. Infolge dieser Anordnung in der vorderen Brennebene besteht eine eindeutige Zuordnung zwischen jedem Freiraumkoppler FSC und einer Abstrahlrichtung.

Die Figur 4 illustriert diesen Zusammenhang in einer vereinfachten Darstellung. Gezeigt ist lediglich eine einzige Verteilmatrix M, die optische Ausgangssignale auf vier Freiraumkoppler FSC1 bis FSC4 verteilt. Die divergent in der vorderen Brennebene 21 aus den Freiraumkopplern FSC1 bis FSC4 austretenden Ausgangssignale werden durch Ablenkoptik 20 kollimiert und in unterschiedliche Richtungen abgelenkt, wie dies die Figur 4 illustriert. Werden die optischen Signale der Reihe nach auf die Freiraumkoppler FSC1 bis FSC4 aufgeschaltet, wandern die von der Scanvorrichtung 14 ausgehenden Lichtstrahlen von der mit durchgezogenen Linien angedeuteten Richtung (Lichtstrahl L11) schrittweise zu der mit gestrichelten Linien angedeuteten Richtung (Lichtstrahl L14).

Im Folgenden wird wieder Bezug auf die Figur 3 genommen. Bei der rechts neben der Ablenkoptik 20 angedeuteten Struktur handelt es sich um ein dispersives optisches Element 22, dessen Bedeutung weiter unten näher erläutert wird.

Die optischen Schalter S11, S21, S22 der Verteilmatrizen M1 bis M4 und die Lichtquelle 16 werden von einer Steuer- und Auswerteeinrichtung 24 gesteuert, die in der Figur 3 als Mikroprozessor µP angedeutet ist. Die Steuer- und Auswerteeinrichtung 24 ist außerdem mit den elektrischen Ausgängen der Detektoren D1 bis D4 verbunden.

### 3. Funktion

Nachfolgend wird unterstellt, dass die Lichtquelle 16 ein optisches Ausgangssignal erzeugt, dessen Frequenz ein periodisches Dreieckssignal erzeugt, wie dies oben bereits erläutert wurde.

Das optische Ausgangssignal wird nach der Verstärkung durch den Verstärker 18 auf die Verarbeitungseinheiten PU1 bis PU4 verteilt und dort von den Zirkulatoren C1 bis C4 den Verteilmatrizen M1 bis M4 übergeben, die es wahlweise einem der Freiraumkoppler FSC zuleiten. Infolge der parallelen Anordnung der Verarbeitungseinheiten PU1 bis PPU4 tritt während jedes Messintervalls Δt aus jeder Verarbeitungseinheit PU1 bis PU4 somit genau ein optisches Ausgangssignal aus und wird von der Ablenkoptik 20 in eine Richtung gerichtet, die durch den Ort des betreffenden Freiraumkopplers FSC in der Brennebene der Ablenkoptik 20 bestimmt ist.

Im Folgenden wird angenommen, dass es sich bei diesen Lichtstrahlen um die Lichtstrahlen L11 bis L14 handelt, die in der Figur 2 gezeigt sind. Treffen diese in einer horizontalen Ebenen abgestrahlten Lichtstrahlen L11 bis L14 auf das Objekt 12, werden sie an dessen Oberfläche diffus reflektiert und somit über einen größeren Raumwinkelbereich hinweg zurückgestrahlt. Ein kleiner Teil des auf das Objekt 12 auftreffenden Lichts wird retroreflektiert, d.h. in die gleiche Richtung zurückgestrahlt, entlang der sich das Licht auf dem Weg zum Objekt 12 hin ausgebreitet hat. In der Figur 3 sind die Lichtwege der optischen Ausgangssignale und der am Objekt 12 reflektierten Messsignale für den Freiraumkoppler FSC11 durch Pfeile für den Lichtstrahl L11 angedeutet.

Die Messsignale koppeln in die Freiraumkoppler FSC ein und gelangen über die Verteilmatrizen M1 bis M4 auf den Zirkulator C1 bis C4 der jeweiligen Verarbeitungseinheit PU1 bis PU4, der sie dem entsprechenden Detektor D1 bis D4 zuleitet. Dort werden die Messsignale den von der Lichtquelle 16 erzeugten optischen Ausgangssignalen überlagert.

Während des Zeitraums, den das Licht für den Weg zum Objekt 12 und zurück benötigt, hat sich die Frequenz der von der Lichtquelle 16 erzeugten optischen Ausgangssignale verändert. Da die optischen Ausgangssignale und die Messsignale ähnliche Frequenzen haben, führt die Überlagerung zu einer Schwebung, deren Frequenz durch Berechnung der FFT (*Fast Fourier Transform*) ermittelt werden kann. Die Schwebungsfrequenz kann direkt in einen Abstandswert umgerechnet werden. Aus der Dopplerverschiebung kann außerdem auf die Relativgeschwindigkeit zwischen dem Fahrzeug 10 und dem Objekt 12 zurückgeschlossen werden. Störsignale vom Umgebungslicht oder von Scaneinrichtungen anderer Fahrzeuge 10 können mangels Kohärenz mit den von der Lichtquelle 16 erzeugten Ausgangssignalen die Messung nicht beeinträchtigen.

Diese Berechnungen werden von der Aussteuer- und Auswerteeinrichtung 24 durchgeführt. Sie ordnet die berechneten Abstände und Relativgeschwindigkeiten den Richtungen zu, in welche die optischen Ausgangssignale von der Ablenkoptik 20 abgestrahlt wurden. Dadurch erhält man ein dreidimensionales Bild der Umgebung.

Im Folgenden wird die Bedeutung des optionalen dispersiven optischen Elements 22, das beispielsweise als optisches Gitter ausgebildet sein kann, erläutert. Das dispersive optische Element 22 spaltet die optischen Signale in einer Ebene wellenlängenabhängig auf, die zumindest im Wesentlichen senkrecht zu der Ebene angeordnet ist, innerhalb der sich die aus den Freiraumkopplern FSC austretenden optischen Ausgangssignale ausbreiten. Diese wellenlängenabhängige Aufspaltung senkrecht zur Papierebene ist in der Figur 3 durch ein Strahlenbündel 26 angedeutet. Innerhalb einer horizontalen Scanebene, wie sie in der Figur 2 gezeigt ist, haben die Lichtstrahlen L11 bis L14 beispielsweise Frequenzen innerhalb eines ersten Frequenzbandes, die Lichtstrahlen L21 bis L24 der nächsten und der dazu geneigten Scanebene haben Frequenzen in einem dazu verschiedenen zweiten Frequenzband, usw.

Um gleichzeitig mehrere optische Ausgangssignale in unterschiedlichen Frequenzbändern erzeugen zu können, enthält die Lichtquelle 16 mehrere nicht dargestellte Einzelquellen, deren Ausgangssignale in unterschiedlichen Frequenzbändern liegen und die überlagert werden, sodass alle Verarbeitungseinheiten PU1 bis PU4 gleichzeitig optische Ausgangssignale in mehreren Frequenzbändern erhalten.

Ein Scannen senkrecht zur Papierebene kann alternativ auch in herkömmlicher Weise mit Hilfe eines rotierenden Spiegels bewirkt werden. Da ein solcher Spiegel nur um eine Achse rotieren muss, kann er mechanisch robust aufgebaut sein. Bevorzugt ist aber für diese Scanrichtung, auf die Verwendung beweglicher Bauteile zu verzichten.

Durch die parallele Anordnung der Verarbeitungseinheiten PU1 bis PU4 mit jeweils einer relativ geringen Zahl von optischen Schaltern S11, S21, S22 muss das vom Objekt 12 reflektierte Messlicht auf seinem Weg zu einem der Detektoren D1 bis D4 nur wenige optische Schalter und nur einen der Zirkulatoren C1 bis C4 durchlaufen. Bei einer Verteilmatrix M mit 8 Ausgängen beträgt die Einfügedämpfung der gesamten Verteilmatrix beispielsweise 3 dB, was einem Verlust von rund 50% entspricht. Dadurch wird das reflektierte Messsignal auf seinem Weg zum jeweiligen Detektor D nur relativ wenig abgeschwächt und kann mit ausreichend hohem Signal-Rausch-Verhältnis detektiert werden. Trotzdem wird eine hohe Pixelrate erzielt, da gleichzeitig mehrere (hier: vier) Lichtstrahlen erzeugt werden können.

Vorteilhaft an dem parallelen Aufbau ist ferner die Tatsache, dass durch die Aufteilung der optischen Ausgangssignale auf mehrere Verarbeitungseinheiten PU1 bis PU4 am Eingang jeder Verteilmatrix M1 bis M4 keine sehr hohe optische Intensität anliegt, wie dies bei Abstandsscannern mit einer einzigen großen Verteilmatrix wegen der dann größeren Gesamt-Einfügedämpfung der Fall muss. Es hat sich nämlich gezeigt, dass vor allem die den höchsten Intensitäten ausgesetzten optischen Schalter auf dem niedrigsten Niveau der Verteilmatrizen - hier also die Schalter S11 - sehr hohen Intensitäten dauerhaft nicht standhalten.

### 4. Aufbau und Funktion der optischen Verteilmatrizen

Die Figuren 5a bis 5d zeigen zwei benachbarte Verteilmatrizen M1, M2 in unterschiedlichen Schaltstellungen für ein Ausführungsbeispiel, bei dem jede Verteilmatrix M1, M2 eingehende optische Ausgangssignale wahlweise auf einen von jeweils acht optischen Wellenleitern verteilen kann, die mit Freiraumkopplern FSC verbunden sind. Der Einfachheit halber sind die rechts dargestellten Freiraumkoppler FSC lediglich mit arabischen Ziffern nummeriert, und zwar in der Reihenfolge, in der sie optische Ausgangssignale abgeben. Diejenigen Freiraumkoppler FSC, die in der gegebenen Schaltstellung der optischen Schalter mit dem Eingang der jeweiligen Verteilmatrix M1, M2 verbunden sind, sind in den Figuren 5a bis 5d durch dunkle Hinterlegung und einen benachbart angeordneten Pfeil hervorgehoben. Aus dem so hervorgehobenen Freiraumkoppler FSC können somit optische Ausgangssignale austreten und nach Reflexion am Objekt 12 als Messsignale wieder eintreten.

Im Gegensatz zu dem in der Figur 3 gezeigten Ausführungsbeispiel haben die Verteilmatrizen M1, M2 jeweils drei Niveaus N1, N2, N3, wobei sich die Zahl der optischen 1 x2-Schalter beim Übergang zum nächsthöheren Niveau jeweils verdoppelt. Werden als optische Schalter 1 x 3-Schalter eingesetzt, verdreifacht sich die Zahl der optischen Schalter zwischen aufeinanderfolgenden Niveaus entsprechend. Anstelle der 1 x n-Schalter können natürlich auch z.B. n x n-Schalter eingesetzt werden, bei denen ein Eingang jeweils unbesetzt bleibt.

In den Schaltmatrizen M1, M2 werden zwei unterschiedliche Typen von optischen Schaltern eingesetzt, die im Folgenden kurz als schnelle optische Schalter und als langsame optische Schalter bezeichnet werden. Die schnellen optischen Schalter sind in den Figuren 5a bis 5d grau hinterlegt und mit abgerundeten Ecken hervorgehoben. Die schnellen optischen Schalter haben die Eigenschaft, dass sie eine kurze Schaltzeit haben, d.h. in sehr kurzer Zeit ihren Schaltzustand ändern können. Damit einher geht aber eine vergleichsweise hohe Einfügedämpfung.

Bei den langsamen Schaltern hingegen ist die Schaltzeit länger, so dass diese nicht so schnell ihren Schaltzustand wechseln können wie die schnellen Schalter. Dafür haben die langsamen Schalter eine niedrigere Einfügedämpfung als die schnellen Schalter, so dass optische Signale beim Durchtritt durch die langsamen Schalter weniger abgeschwächt werden als beim Durchtritt durch einen schnellen Schalter.

Im dargestellten Ausführungsbeispiel befinden sich die schnellen Schalter ausschließlich auf dem niedrigsten Niveau N1 und somit am Eingang der Verteilmatrizen M1, M2. Für die höheren Niveaus N2 und N3 werden ausschließlich langsame optische Schalter eingesetzt. Durch eine geeignete Ansteuerung der Verteilmatrizen M1, M2 lässt sich erreichen, dass die Verteilmatrizen M1, M2 insgesamt eine sehr niedrige Einfügedämpfung haben, aber trotzdem mit den kurzen Schaltzeiten der schnellen Schalter betrieben werden können. Eine solche Ansteuerung wird im Folgenden näher erläutert.

Die Figur 5a zeigt die beiden Verteilmatrizen M1, M2 während eines ersten Messintervalls Δt1. Der schnelle optische Schalter S11 in jeder Verteilmatrix M1 leitet die optischen Ausgangssignale zum langsamen Schalter S21 und dieser zum langsamen Schalter S31, so dass die optischen Ausgangssignale aus dem Freiraumkoppler FSC1 austreten. Aktiv sind in dieser Schaltstellung somit nur die Schalter S11, S21 und S31; durch die übrigen optischen Schalter treten während des ersten Messintervalls Δt1 keine optischen Ausgangssignale.

Nach Beendigung des Messintervalls Δt1 wird der schnelle optische Schalter S11 der Verteilmatrizen M1, M2 umgestellt. Diese Umstellung erfolgt sehr schnell, da der schnelle optische Schalter S11 eine kurze Schaltzeit hat. Zwischen zwei aufeinanderfolgenden Messintervallen geht somit nur wenig Zeit für die Umstellung der Verteilmatrizen M1, M2 verloren.

Infolge der Umstellung des Schalters S11 werden die optischen Ausgangssignale nun über die langsamen Schalter S22 und S33 den Freiraumkopplern FSC2 zugeleitet, die aber nicht benachbart zu den Freiraumkopplern FSC1 angeordnet sind, wie dies in der Figur 5b erkennbar ist.

Während des zweiten Messintervalls Δt2 wird in jederVerteilmatrix M1, M2 der langsame optische Schalter S31 auf dem Niveau N3 umgestellt. In den Figuren 5b bis 5d sind diejenigen langsamen optischen Schalter, die während eines Messintervalls verstellt werden, durch graue Hinterlegung und einen Pfeil hervorgehoben. Für diese Umstellung steht das gesamte Messintervall Δt2 zur Verfügung, so dass die maximale Schaltgeschwindigkeit der langsamen Schalter lediglich kürzer sein muss als die Länge der Messintervalle.

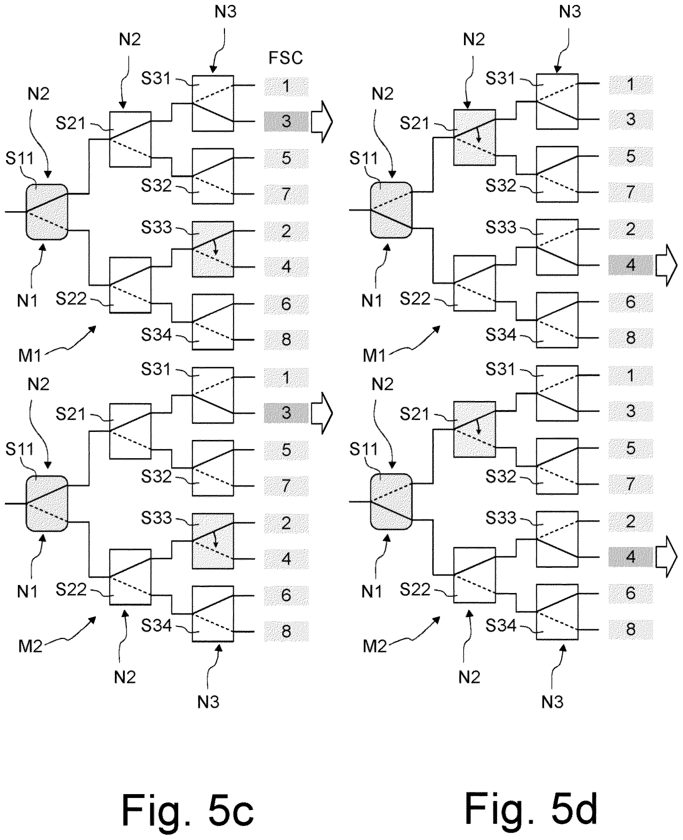

Nach Abschluss des zweiten Messintervalls Δt2 wird in den Verteilmatrizen M1, M2 jeweils der schnelle Schalter S11 auf dem Niveau N1 wieder in seine ursprüngliche Schaltstellung zurückgeführt. Infolge dieser Umstellung und der zuvor erfolgten Umstellung des langsamen Schalters S31 werden die optischen Ausgangssignale nun jeweils auf den Freiraumkoppler FSC3 geleitet, wie dies die Figur 5c illustriert. Auch der Freiraumkoppler FSC3 ist nicht benachbart zum vorher aktiven Freiraumkoppler FSC2 angeordnet. Während des dritten Messintervalls Δt3 wird wieder ein inaktiver langsamer optischer Schalter, hier der Schalter S33, umgestellt.

Wenn nach Abschluss des dritten Messintervalls Δt3 der schnelle optische Schalter S11 wieder seine Stellung wechselt, werden die optischen Signale sofort dem Freiraumkoppler FSC4 zugeführt, wie dies die Figur 5d zeigt. Während des vierten Messintervalls Δt4 wird der langsame Schalter S21 aus dem zweiten Niveau N2 umgestellt, um im darauffolgenden fünften Messintervall den Eingang der Verteilmatrizen M1, M2 mit dem Freiraumkoppler FSC5 verbinden zu können, usw.

Da die entlang einer Linie nebeneinander angeordneten Freiraumkoppler FSC nicht nacheinander durchgeschaltet werden, sondern der schnelle optische Schalter S11 immer zwischen zwei Gruppen von jeweils vier Freiraumkopplern hin- und herschaltet, wird die maximale Schaltgeschwindigkeit der Verteilmatrizen M1, M2 nur durch die kurzen Schaltzeiten der schnellen Schalter S11 begrenzt. Trotzdem ist die Einfügedämpfung der beiden Verteilmatrizen M1, M2 niedrig, da die optischen Ausgangssignale (und in Rückrichtung die vom Objekt 12 reflektierten Messsignale) überwiegend optische Schalter mit einer besonders niedrigen Einfügedämpfung auf den Niveaus N2 und N3 durchtreten.

Je größer die Zahl der Niveaus ist, desto weniger fällt die höhere Einfügedämpfung der schnellen Schalter S11 ins Gewicht. Andererseits sollte die Zahl der Niveaus auch nicht zu groß sein, da auch die langsamen Schalter auf den höheren Niveaus die optischen Signale spürbar dämpfen. Als ideal haben sich drei oder vier Niveaus und damit eine Verteilung auf acht bzw. sechzehn optische Wellenleiter herausgestellt.

### 5. Weitere Ausführungsbeispiele

Die Figuren 6a und 6b zeigen ein Ausführungsbeispiel, bei dem schnelle optische Schalter nicht nur im niedrigsten Niveau N1, sondern auch im nächsthöheren Niveau N2 angeordnet sind. Wie ein Vergleich der Figuren 6a und 6b zeigt, liegen dadurch die Freiraumkoppler FSC, bei denen in aufeinander folgenden Messintervallen Δt optische Ausgangssignale austreten, dichter beieinander als bei dem in den Figuren 5a bis 5d gezeigten Ausführungsbeispiel. Für bestimmte Anwendungen kann dies vorteilhaft sein.

Für die meisten Anwendungen jedoch - darunter auch Abstandsscanner für Fahrzeuge - spielt die Reihenfolge keine Rolle, in der die Freiraumkoppler FSC optische Ausgangssignale abgeben. Da durch die zusätzlichen schnellen optischen Schalter auf dem Niveau N2 eine höhere Einfügedämpfung entsteht, wird die in den Figuren 5a bis 5d gezeigte Anordnung in der Regel zu bevorzugen sein.

Die Figur 7 zeigt in einer an die Figur 3 angelehnten schematischen Darstellung eine Verarbeitungseinheit PU1 gemäß einem Ausführungsbeispiel, bei dem die von der Lichtquelle 16 erzeugten optischen Ausgangssignale nicht bereits vor der Verteilung auf die Verarbeitungseinheiten PU1 bis PU4 mit Hilfe des Verstärkers 18 verstärkt werden, sondern erst innerhalb der einzelnen Verarbeitungseinheiten. Dazu enthält jede der Verarbeitungseinheiten einen eigenen Verstärker, der für die Verarbeitungseinheit PU1 in der Figur 7 mit A1 bezeichnet ist. Außerdem enthält die Verteilmatrix M1 der Verarbeitungseinheit PU1 nicht zwei, sondern drei Niveaus, so dass acht Freiraumkoppler FSC angesteuert werden können.

Die Figur 8 zeigt eine Anordnung von sechs Verarbeitungseinheiten PU1 bis PU6, diejeweils den in der Figur 7 gezeigten Aufbau haben. Infolge dieser Anordnung sind die Freiraumkoppler FSC1 insgesamt nicht entlang einer Linie, sondern in einem regelmäßigen zweidimensionalen Array neben- und übereinander angeordnet. Wird eine solche Anordnung in der Brennebene der Ablenkoptik 20 angeordnet, lässt sich die Umgebung in der horizontalen und vertikalen Richtung auch ohne Verwendung des dispersiven optischen Elements 22 und einer aufwendigeren Lichtquelle 16 abscannen. Die jeweils unmittelbar benachbart angeordneten Verarbeitungseinheiten PU1 und PU2, PU3 und PU4 sowie PU5 und PU6 können beispielsweise jeweils die Abtastung in horizontalen Ebenen bewirken, die in vertikaler Richtung geneigt zueinander angeordnet sind, wie dies die Figuren 1 und 2 illustrieren.

## Patentansprüche

1. Vorrichtung (14) zur scannenden Messung des Abstands zu einem Objekt (12), mit
einer Lichtquelle (16), die dazu eingerichtet ist, ein optisches Ausgangssignal mit einer zeitlich variierenden Frequenz zu erzeugen,
mehreren optischen Verarbeitungseinheiten (PU1 bis PU4), die optisch parallel mit der Lichtquelle (16) verbunden sind, wobei jede Verarbeitungseinheit (PU1 bis PU4) umfasst:
eine optische Verteilmatrix (M1 bis M4), die mehrere optische Schalter (S11, S21, S22, S31 bis S34) aufweist und dazu eingerichtet ist, ein der jeweiligen Verarbeitungseinheit (PU1 bis PU4) zugeführtes optisches Ausgangssignal wahlweise auf unterschiedliche optische Wellenleiter (W11 bis W14) zu verteilen,
mehrere Freiraumkoppler (FSC11 bis FSC14), die mit den optischen Wellenleitern (W11 bis W14) verbunden und jeweils dazu eingerichtet sind,
ein in einem der optischen Wellenleiter (W11 bis W14) geführtes optisches Ausgangssignal in den Freiraum auszukoppeln und
ein an dem Objekt (12) reflektiertes optisches Ausgangssignal als optisches Messsignal einzukoppeln,
einen Detektor (D1 bis D4), der dazu eingerichtet ist, eine Überlagerung des optischen Messsignals mit dem von der Lichtquelle (16) erzeugten optischen Ausgangssignal zu erfassen,
einen optischen Zirkulator (C1 bis C4), der so mit der Lichtquelle (16), der optischen Verteilmatrix (M1 bis M4) und dem Detektor (D1 bis D4) verbunden ist, dass von der Lichtquelle (16) zugeführte optische Ausgangssignale an die Verteilmatrix (M1 bis M4) geleitet und von der Verteilmatrix (M1 bis M4) kommende optische Messsignale an den Detektor (D1 bis D4) geleitet werden,
einer Ablenkoptik (20), die dazu eingerichtet ist, die aus den Freiraumkopplern (FSC11 bis FSC14) ausgekoppelten Ausgangssignale so abzulenken, dass sie in unterschiedliche Richtungen abgestrahlt werden,
einer Auswerteeinrichtung (24), die dazu eingerichtet ist, aus der von den Detektoren (D1 bis D4) erfassten Überlagerung einen Abstand zu dem Objekt (12) zu bestimmen,
**dadurch gekennzeichnet, dass** die optische Verteilmatrix (M1 bis M4) aufweist:
mindestens einen ersten optischen Schalter (S11), der eine erste Schaltzeit und eine erste Einfügedämpfung hat,
mehrere zweite optische Schalter (S21, S22, S31 bis S34), die jeweils eine zweite Schaltzeit, die länger ist als die erste Schaltzeit, und eine zweite Einfügedämpfung haben, die kleiner ist als die erste Einfügedämpfung,
wobei der erste optische Schalter (S11) auf einem Niveau (N1) des Baums angeordnet ist, das niedriger ist als das Niveau (N2, N3), auf dem die zweiten optischen Schalter (S21, S22, S31 bis S34) angeordnet sind.

2. Vorrichtung nach Anspruch 1, bei der die Ablenkoptik (20) eine vordere Brennebene (21) hat, in der die Freiraumkoppler (FSC1 bis FSC4; FSC11 bis FSC14) angeordnet sind.

3. Vorrichtung nach einem der Ansprüche 1 oder 2, bei der die Detektoren (D1 bis D4) symmetrische Fotodetektoren und mit der Lichtquelle (16) verbunden sind.

4. Vorrichtung nach einem der vorhergehenden Ansprüche, bei der im Lichtweg zwischen der Lichtquelle (16) und den Verarbeitungseinheiten (PU1 bis PU4) ein optischer Verstärker (18) angeordnet ist.

5. Vorrichtung nach einem der vorhergehenden Ansprüche, bei der die Lichtquelle (16) dazu eingerichtet ist, gleichzeitig mehrere optische Ausgangssignale mit zeitlich variierender Frequenz in unterschiedlichen Frequenzbändern zu erzeugen.

6. Vorrichtung nach Anspruch 5, bei der die Ablenkoptik ein dispersives optisches Element (22) aufweist, das die optischen Ausgangssignale in einer ersten Ebene wellenlängenabhängig aufspaltet, die zumindest im Wesentlichen senkrecht zu einer zweiten Ebene angeordnet ist, innerhalb derer die sich aus den Freiraumkopplern (FSC11 bis FSC14) austretenden optischen Ausgangssignale ausbreiten.

7. Vorrichtung nach einem der vorhergehenden Ansprüche, bei der die Lichtquelle (16) dazu eingerichtet ist, ein optisches Ausgangssignal zu erzeugen, dessen Frequenz über der Zeit im Wechsel linear ansteigt und linear abfällt.

8. Vorrichtung nach einem der vorhergehenden Ansprüche, bei der die Freiraumkoppler (FSC11 bis FSC14) in einem zweidimensionalen Array neben- und übereinander angeordnet sind.

9. Vorrichtung nach Anspruch 1, bei welcher der erste optische Schalter (S11) auf dem niedrigsten Niveau (N1) des Baums angeordnet ist und auf allen anderen Niveaus (N2, N3) ausschließlich zweite optische Schalter (S21, S22, S31 bis S34) angeordnet sind.

10. Verfahren zur scannenden Messung des Abstands zu einem Objekt (12) mit folgenden Schritten:
a) es werden optische Ausgangssignale mit einer zeitlich variierenden Frequenz erzeugt;
b) mehrere optisch parallel angeordnete optische Verarbeitungseinheiten (PU1 bis PU4) verteilen jeweils über einen optischen Zirkulator (C1 bis C4) und eine optische Verteilmatrix (M1 bis M4), die mehrere optische Schalter (S11, S21, S22, S31 bis S34) aufweist, die den Verarbeitungseinheiten (PU1 bis PU4) zugeführten optischen Ausgangssignale auf unterschiedliche optische Wellenleiter (W11 bis W14), wobei zu einem gegebenen Zeitpunkt aus jeder Verarbeitungseinheit (PU1 bis PU4) genau ein optisches Ausgangssignal in den Freiraum ausgekoppelt wird;
c) die in den optischen Wellenleitern (W11 bis W14) geführten optischen Ausgangssignale werden in einen Freiraum ausgekoppelt und in unterschiedliche Richtungen abgestrahlt;
d) an dem Objekt (12) reflektierte optische Ausgangssignale werden als optische Messsignale in die optischen Wellenleiter (W11 bis W14) eingekoppelt;
e) der optische Zirkulator (C1 bis C4) der jeweiligen Verarbeitungseinheit (PU1 bis PU4) leitet die eingekoppelten optischen Messsignale nach Durchtritt durch die Verteilmatrix (M1 bis M4) an einen Detektor (D1 bis D4) der Verarbeitungseinheit (PU1 bis PU4);
f) die Detektoren (D1 bis D4) der Verarbeitungseinheiten (PU1 bis PU4) erfassen eine Überlagerung der optischen Messsignale mit den von der Lichtquelle (16) erzeugten optischen Ausgangssignalen;
g) aus jeder von den Detektoren (D1 bis D4) erfassten Überlagerung wird ein Abstand zu dem Objekt (12) bestimmt,
**dadurch gekennzeichnet, dass**
die optische Verteilmatrix (M1 bis M4) die Struktur eines Baums mit mehreren Niveaus (N1 bis N3) hat und aufweist:
mindestens einen ersten optischen Schalter (S11) aufweist, der eine erste Schaltzeit und eine erste Einfügedämpfung hat,
mehrere zweite optische Schalter (S21, S22, S31 bis S34), die jeweils eine zweite Schaltzeit, die länger ist als die erste Schaltzeit, und eine zweite Einfügedämpfung haben, die kleiner ist als die erste Einfügedämpfung,
wobei der erste optische Schalter (S11) auf einem Niveau (N1) des Baums angeordnet ist, das niedriger ist als das Niveau (N2, N3), auf dem die zweiten optischen Schalter (S21, S22, S31 bis S34) angeordnet sind, und
wobei der erste Schalter (S11) nur in Zeiten zwischen zwei aufeinander folgenden Messintervallen (Δt) betätigt wird und die zweiten Schalter (S21, S22, S31 bis S34) zumindest auch während der Messintervalle (Δt) betätigt werden.

## Claims

1. Device (14) for scanning measurement of the distance to an object (12), comprising
a light source (16), which is configured to generate an optical output signal having a time-varying frequency,
a plurality of optical processing units (PU1 to PU4), which are optically connected in parallel to the light source (16), wherein each processing unit (PU1 to PU4) comprises:
an optical distribution matrix (M1 to M4), which comprises several optical switches (S11, S21, S22, S31 to S34) and is configured to distribute an optical output signal supplied to the respective processing unit (PU1 to PU4) selectively to different optical waveguides (W11 to W14),
a plurality of free-space couplers (FSC11 to FSC14), which are connected to the optical waveguides (W11 to W14) and are each configured to
out-couple an optical output signal guided in one of the optical waveguides (W11 to W14) into the free space and to
in-couple an optical output signal reflected at the object (12) as an optical measurement signal,
a detector (D1 to D4), which is configured to detect a superposition of the optical measurement signal with the optical output signal generated by the light source (16),
an optical circulator (C1 to C4), which is connected to the light source (16), the optical distribution matrix (M1 to M4) and the detector (D1 to D4) in such a way that optical output signals supplied by the light source (16) are guided to the distribution matrix (M1 to M4) and optical measurement signals coming from the distribution matrix (M1 to M4) are guided to the detector (D1 to D4),
deflection optics (20), which is configured to deflect the output signals coupled out of the free-space couplers (FSC11 to FSC14) in such a way that they are emitted in different directions,
an evaluation device (24), which is configured to determine a distance to the object (12) from the superposition detected by the detectors (D1 to D4),
**characterized in that**
the optical distribution matrix comprises (M1 to M4):
at least one first optical switch (S11), which has a first switching time and a first insertion loss,
a plurality of second optical switches (S21, S22, S31 to S34), each of which having a second switching time that is longer than the first switching time and a second insertion loss that is smaller than the first insertion loss,
wherein the first optical switch (S11) is arranged at a level (N1) of the tree which is lower than the level (N2, N3) at which the second optical switches (S21, S22, S31 to S34) are arranged.

2. Device according to claim 1, in which the deflection optics (20) has a front focal plane (21) in which the free-space couplers (FSC1 to FSC4; FSC11 to FSC14) are arranged.

3. The device according to any one of claims 1 or 2, wherein the detectors (D1 to D4) are symmetrical photodetectors and are connected to the light source (16).

4. Device according to one of the preceding claims, wherein an optical amplifier (18) is arranged in the light path between the light source (16) and the processing units (PU1 to PU4).

5. The device according to any one of the preceding claims, wherein the light source (16) is configured to simultaneously generate a plurality of optical output signals having a time-varying frequency in different frequency bands.

6. The device according to claim 5, wherein the deflection optics comprises a dispersive optical element (22) which splits the optical output signals in a wavelength-dependent manner in a first plane, which is arranged at least substantially perpendicular to a second plane within which the optical output signals emerging from the free-space couplers (FSC11 to FSC14) propagate.

7. The device according to any one of the preceding claims, wherein the light source (16) is arranged to generate an optical output signal whose frequency alternately increases and decreases linearly over time.

8. Device according to one of the preceding claims, wherein the free-space couplers (FSC11 to FSC14) are arranged in a two-dimensional array next to and above one another.

9. Device according to claim 1, in which the first optical switch (S11) is arranged at the lowest level (N1) of the tree and only second optical switches (S21, S22, S31 to S34) are arranged at all other levels (N2, N3).

10. Method for scanning measurement of the distance to an object (12), comprising the following steps:
a) optical output signals having a time-varying frequency are generated;
b) a plurality of optical processing units (PU1 to PU4) arranged optically in parallel each distribute optical output signals via an optical circulator (C1 to C4) and an optical distribution matrix (M1 to M4), which comprises a plurality of optical switches (S11, S21, S22, S31 to S34), the optical output signals guided to the processing units (PU1 to PU4) to different optical waveguides (W11 to W14), with exactly one optical output signal being coupled out of each processing unit (PU1 to PU4) into the free space at a given time;
c) the optical output signals guided in the optical waveguides (W11 to W14) are out-coupled into a free space and emitted in different directions;
d) optical output signals reflected at the object (12) are in-coupled into the optical waveguides (W11 to W14) as optical measurement signals;
e) the optical circulator (C1 to C4) of the respective processing unit (PU1 to PU4) transmits the in-coupled optical measurement signals to a detector (D1 to D4) of the processing unit (PU1 to PU4) after passing through the distribution matrix (M1 to M4);
f) the detectors (D1 to D4) of the processing units (PU1 to PU4) detect a superposition of the optical measurement signals with the optical output signals generated by the light source (16);
g) a distance to the object (12) is determined from each superposition detected by the detectors (D1 to D4),
**characterized in that**
the optical distribution matrix (M1 to M4) has the structure of a tree having a plurality of levels (N1 to N3) and comprises:
at least one first optical switch (S11), which has a first switching time and a first insertion loss,
a plurality of second optical switches (S21, S22, S31 to S34), each of which having a second switching time that is longer than the first switching time and a second insertion loss that is smaller than the first insertion loss,
wherein the first optical switch (S11) is arranged at a level (N1) of the tree which is lower than the level (N2, N3) at which the second optical switches (S21, S22, S31 to S34) are arranged, and
wherein the first switch (S11) is only actuated in times between two consecutive measuring intervals (Δt) and the second switches (S21, S22, S31 to S34) are also actuated at least during the measuring intervals (Δt).

## Revendications

1. Dispositif (14) pour la mesure par balayage de l'écart à un objet (12), avec une source lumineuse (16) qui est configurée pour générer un signal de sortie optique avec une fréquence variable dans le temps,
plusieurs modules de traitement optique (PU1 à PU4) qui sont connectés optiquement parallèlement à la source lumineuse (16), dans lequel chaque module de traitement (PU1 à PU4) comprend :
une matrice de distribution optique (M1 à M4) qui présente plusieurs commutateurs optiques (S11, S21, S22, S31 à S34) et est configurée pour distribuer un signal de sortie optique acheminé au module de traitement respectif (PU1 à PU4) sélectivement à différents guides d'ondes optiques (W11 à W14),
plusieurs coupleurs d'espace libre (FSC11 à FSC14) qui sont connectés aux guides d'ondes optiques (W11 à W14) et chacun configurés pour découpler un signal de sortie optique guidé dans un des guides d'ondes optiques associés (W11 à W14) dans l'espace libre et
coupler un signal de sortie optique réfléchi sur l'objet (12) en tant que signal de mesure optique,
un détecteur (D1 à D4) qui est configuré pour détecter une superposition du signal de mesure optique avec le signal de sortie optique généré par la source lumineuse (16),
un circulateur optique (C1 à C4) qui est connecté à la source lumineuse (16), à la matrice de distribution optique (M1 à M4) et au détecteur (D1 à D4) de sorte que des signaux de sortie optiques acheminés par la source lumineuse (16) sont dirigés vers la matrice de distribution (M1 à M4) et des signaux de mesure optiques arrivant de la matrice de distribution (M1 à M4) sont dirigés vers le détecteur (D1 à D4),
une optique de déviation (20) qui est configurée pour dévier les signaux de sortie découplés des coupleurs d'espace libre (FSC11 à FSC14) de sorte qu'ils sont émis dans différentes directions,
un module d'évaluation (24) qui est configuré pour déterminer un écart à l'objet (12) à partir de la superposition détectée par les détecteurs (D1 à D4), **caractérisé en ce que**
la matrice de distribution optique (M1 à M4) présente :
au moins un premier commutateur optique (S11) qui a un premier temps de réponse et un premier affaiblissement d'insertion,
plusieurs seconds commutateurs optiques (S21, S22, S31 à S34) qui ont chacun un second temps de réponse qui est plus long que le premier temps de réponse et un second affaiblissement d'insertion qui est inférieur au premier affaiblissement d'insertion,
dans lequel le premier commutateur optique (S11) est agencé à un niveau (N1) de l'arbre qui est inférieur au niveau (N2, N3) auquel les seconds commutateurs optiques (S21, S22, S31 à S34) sont agencés.

2. Dispositif selon la revendication 1, dans lequel l'optique de déviation (20) a un plan focal avant (21) dans lequel les coupleurs d'espace libre (FSC1 à FSC4 ; FSC11 à FSC14) sont agencés.

3. Dispositif selon une des revendications 1 ou 2, dans lequel les détecteurs (D1 à D4) sont des photodétecteurs symétriques et sont connectés à la source lumineuse (16).

4. Dispositif selon une des revendications précédentes, dans lequel un amplificateur optique (18) est agencé dans le chemin optique entre la source lumineuse (16) et les modules de traitement (PU1 à PU4).

5. Dispositif selon une des revendications précédentes, dans lequel la source lumineuse (16) est configurée pour générer plusieurs signaux de sortie optiques avec une fréquence variable dans le temps dans différentes bandes de fréquences simultanément.

6. Dispositif selon la revendication 5, dans lequel l'optique de déviation présente un élément optique dispersif (22) qui fractionne les signaux de sortie optiques dans un premier plan en fonction de la longueur d'onde, qui est agencé au moins essentiellement perpendiculairement à un second plan au sein duquel les signaux de sortie optiques sortant des coupleurs d'espace libre (FSC11 à FSC14) se propagent.

7. Dispositif selon une des revendications précédentes, dans lequel la source lumineuse (16) est configurée pour générer un signal de sortie optique dont la fréquence augmente linéairement et chute linéairement en alternance dans le temps.

8. Dispositif selon une des revendications précédentes, dans lequel les coupleurs d'espace libre (FSC11 à FSC14) sont agencés dans un réseau bidimensionnel côte à côte et l'un au-dessus de l'autre.

9. Dispositif selon la revendication 1, dans lequel le premier commutateur optique (S11) est agencé au niveau le plus bas (N1) de l'arbre et des seconds commutateurs optiques (S21, S22, S31 à S34) sont exclusivement agencés sur tous les autres niveaux (N2, N3).

10. Procédé pour la mesure par balayage de l'écart à un objet (12) avec les étapes suivantes :
a) des signaux de sortie optiques avec une fréquence variable dans le temps sont générés ;
b) plusieurs modules de traitement optique (PU1 à PU4) agencés optiquement en parallèle distribuent chacun par le biais d'un circulateur optique (C1 à C4) et d'une matrice de distribution optique (M1 à M4) qui présente plusieurs commutateurs optiques (S11, S21, S22, S31 à S34) les signaux de sortie optiques acheminés aux modules de traitement (PU1 à PU4) sur différents guides d'ondes optiques (W11 à W14), dans lequel exactement un signal de sortie optique est découplé dans l'espace libre à un instant donné à partir de chaque module de traitement (PU1 à PU4) ;
c) les signaux de sortie optiques guidés dans les guides d'ondes optiques (W11 à W14) sont découplés dans un espace libre et émis dans différentes directions ;
d) des signaux de sortie optiques réfléchis sur l'objet (12) sont couplés en tant que signaux de mesure optiques dans les guides d'ondes optiques (W11 à W14) ;
e) le circulateur optique (C1 à C4) du module de traitement respectif (PU1 à PU4) dirige les signaux de mesure optiques couplés après passage à travers la matrice de distribution (M1 à M4) vers un détecteur (D1 à D4) du module de traitement (PU1 à PU4) ;
f) les détecteurs (D1 à D4) des modules de traitement (PU1 à PU4) détectent une superposition des signaux de mesure optiques avec les signaux de sortie optiques générés par la source lumineuse (16) ;
g) un écart à l'objet (12) est déterminé à partir de chaque superposition détectée par les détecteurs (D1 à D4),
**caractérisé en ce que**
la matrice de distribution optique (M1 à M4) a la structure d'un arbre avec plusieurs niveaux (N1 à N3) et présente :
au moins un premier commutateur optique (S11) qui a un premier temps de réponse et un premier affaiblissement d'insertion,
plusieurs seconds commutateurs optiques (S21, S22, S31 à S34) qui ont chacun un second temps de réponse qui est plus long que le premier temps de réponse et
un second affaiblissement d'insertion qui est inférieur au premier affaiblissement d'insertion,
dans lequel le premier commutateur optique (S11) est agencé à un niveau (N1) de l'arbre qui est inférieur au niveau (N2, N3) auquel les seconds commutateurs optiques (S21, S22, S31 à S34) sont agencés, et
dans lequel le premier commutateur (S11) n'est actionné que dans des périodes entre deux intervalles de mesure successifs (Δt) et les seconds commutateurs optiques (S21, S22, S31 à S34) sont actionnés au moins également pendant l'intervalle de mesure (Δt).
